(19) Europäisches Patentamt / European Patent Office / Office européen des brevets

(11) **EP 2 492 848 B1**

(12) **EUROPÄISCHE PATENTSCHRIFT**

(45) Veröffentlichungstag und Bekanntmachung des Hinweises auf die Patenterteilung:
**25.11.2015 Patentblatt 2015/48**

(51) Int Cl.:
***G06K 19/077*** (2006.01)

(21) Anmeldenummer: **12001164.8**

(22) Anmeldetag: **22.02.2012**

(54) **Verfahren zum Betreiben eines Datenträgers und Datenträger mit einer Antennenstruktur**

Method for operating a data medium and data medium with an antenna structure

Procédé de fonctionnement d'un support de données et support à données doté d'une structure d'antennes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2011 DE 102011012230**

(43) Veröffentlichungstag der Anmeldung:
**29.08.2012 Patentblatt 2012/35**

(73) Patentinhaber: **Giesecke & Devrient GmbH 81677 München (DE)**

(72) Erfinder:
• **Baldischweiler, Michael 81825 München (DE)**
• **Finkenzeller, Klaus 85774 Unterföhring (DE)**

(56) Entgegenhaltungen:
**US-A- 5 099 227   US-A1- 2004 232 248
US-B1- 6 356 535**

**Beschreibung**

Die Erfindung betrifft einen tragbaren Datenträger, insbesondere in Gestalt einer MikroSD-Karte, mit einem Träger, einer ersten und einer zweiten Antenne und einer mit der ersten und der zweiten Antenne gekoppelten Verarbeitungseinheit.

Tragbare Datenträger, wie z.B. Chipkarten oder Massenspeicherkarten, weisen häufig sowohl eine kontaktbehaftete Schnittstelle als auch eine kontaktlose Schnittstelle auf. Die tragbaren Datenträger können somit auch als Transponder in RFID (Radio Frequency Identification)-Systemen eingesetzt werden. Herkömmlich erfolgt sowohl die Energieversorgung eines Transponders in einem RFID-System als auch der Datenaustausch zwischen dem Transponder und einem Lesegerät unter Verwendung magnetischer oder elektromagnetischer Felder. RFID-Transponder besitzen eine elektronische Schaltung und je nach Frequenzbereich eine Antennenspule (z.B. 13,56 MHz) oder eine elektromagnetische Antenne (z.B. 868 MHz). Über die Antenne kann dem Feld des Lesegeräts die zum Betrieb des Transponders nötige Energie entnommen sowie die Datenübertragung durchgeführt werden.

RFID-Systeme, beispielsweise für verschiedene Kopplungsarten, sowie eine Lastmodulation unter Verwendung eines Hilfsträgers in induktiv gekoppelten RFID-Systemen werden insbesondere unter Kapitel 3.2 in dem "RFID-Handbuch", 5. Auflage, Hanser Verlag, von Klaus Finkenzeller, beschrieben.

Bis zu einem bestimmten Abstand zwischen einem Lesegerät und dem Datenträger, welcher auch als Energiereichweite bezeichnet wird, kann der Datenträger dem Feld des Lesegerätes gerade noch ausreichend Energie zum Eigenbetrieb seiner Schaltung entnehmen. Typische Energiereichweiten solcher Systeme sind etwa 10 cm für ISO 14443 und bis zu 1 m für ISO 15693 kompatible Systeme. Um die Reichweite eines kontaktlosen Datenträgers, welcher insbesondere sehr kleine Antennen aufweist, zu erhöhen, ist die Verwendung von aktiven Verfahren bekannt. In der WO 2006/000446 A1 der Anmelderin ist ein Verfahren beschrieben, mittels dem ein aktiver Transponder realisiert wird, welcher mit einem handelsüblichen, für den Empfang von Lastmodulation konzipierten RFID-Lesegerät kommunizieren kann. Bei diesem ist über eine Verarbeitungseinheit mittels einer Antenne ein Feld erzeugbar, das bei einer sendenden Kommunikation des Datenträgers mit dem Lesegerät eine Modulation des Lesegerätfelds bewirkt. Dieses als aktive Lastmodulation bezeichnete Verfahren findet beispielsweise Verwendung in (kleinen) Speicherkarten, wie z.B. einer Multi-Media-Card oder einer MikroSD-Karte.

Ein Problem bei der Realisierung einer MikroSD-Karte mit aktiver Lastmodulation ist die Synchronisation der Sendefrequenz der MikroSD-Karte mit der Sendefrequenz des Lesegeräts. Bedingt durch Toleranzen in den Frequenz bestimmenden Bauteilen, in der Regel Schwingquarzen, können die beiden Frequenzen um einige hundert Hertz bis hin zu einigen Kilohertz auseinander liegen. Dies führt bei zunehmendem Frequenzversatz zu Problemen in der Datenübertragung von dem Datenträger zum Lesegerät, da der Datenstrom vom Lesegerät nicht mehr fehlerfrei decodiert werden kann.

Erzeugt der Datenträger eine aktive Lastmodulation, so ist die Amplitude des Sendesignals so groß, dass der Empfang eines (annähernd gleich frequenten) Signals vom Lesegerät zu Synchronisationszwecken nicht möglich ist. Zur Umgehung dieser Problematik werden bislang PLL (Phase Locked Loop)-Schaltungen mit einem Sample-Hold-Mechanismus eingesetzt, bei dem die Oszillatorfrequenz der MikroSD-Karte während des Empfangsbetriebes mit der Sendefrequenz des Lesegerätes mittels der PLL synchronisiert. Während des Sendebetriebs wird hierdurch die Frequenz gehalten. Eine solche PLL ist jedoch in der Entwicklung und Realisierung aufwändig und teuer.

Zur Optimierung des Energieverbrauchs wird in der bereits genannten Schrift WO 2006/000446 A1 das Trägersignal (Frequenz fc) unterdrückt, so dass nur die beiden Hilfsträger (Hilfsträgerfrequenzen: fc-sub und fc+sub) moduliert und übertragen werden. Zur weiteren Reduktion des Energieverbrauchs wurde bereits diskutiert, nur noch einen der beiden Hilfsträger (Hilfsträgerfrequenz fc+sub) zu modulieren. In einem analogen, weiteren Reduktionsschritt kann für diesen Hilfsträger ebenfalls die (Hilfs-) Trägerfrequenz unterdrückt werden und nur noch eines der beiden Modulationseitenbänder (oberhalb oder unterhalb von fc+sub) übertragen werden. Mit jedem dieser Teilschritte wird das Lesegerätfeld besser erkennbar und es sollte leichter werden, eine Synchronisation der aktiv lastmodulierenden Karte zu dem Feld des Lesegerätes vorzunehmen.

Aus der EP 1936 740 A1 ist darüber hinaus ein tragbarer Datenträger mit zwei Antennentypen für unterschiedliche Frequenzen gezeigt. Der tragbare Datenträger wird für Messungen einer Bewegungsinformation, insbesondere einer Geschwindigkeit oder einem Abstand, eingesetzt und basiert auf dem sog. Doppler-Prinzip. Der Datenträger weist eine Antennenfläche aus einem leitfähigen Material auf. Die Antenne hat eine vorbestimmte Antennenstruktur, durch welche eine erste Resonanzfrequenz der Antenne eingestellt ist. Die Antennenfläche ist mit einer frequenzselektiven Oberfläche (FSS) versehen, durch welche eine zweite Resonanzfrequenz der Antenne eingestellt ist, die von der ersten Resonanzfrequenz unterschiedlich ist. Die zweite Resonanzfrequenz führt zu einer zweiten Doppler-Frequenz, die bei einer unterschiedlichen Frequenz liegt als die Doppler-Frequenz aufgrund der ersten Resonanzfrequenz.

Einen Datenträger mit zwei Antennen zeigt US 2004/0232248 A1. In US 5,099,227 haben Lesegerät und Datenträger jeweils orthogonal zueinander angeordnete und für unterschiedliche Frequenzen vorgesehene Sende- und Empfangsantennen. Die Ansprüche 1 und 12 sind gegenüber diesem Dokument abgegrenzt.

Es ist Aufgabe der vorliegenden Erfindung, einen tragbaren Datenträger sowie ein Verfahren zum Betreiben desselben anzugeben, welche eine stabile Grundfrequenz für einen Datenträger mit aktiver Lastmodulation bereitstellen.

Diese Aufgaben werden gelöst durch einen tragbaren Datenträger gemäß den Merkmalen des Patentanspruches 1 sowie ein Verfahren gemäß den Merkmalen des Patentanspruches 12. Vorteilhafte Ausgestaltungen ergeben sich aus den abhängigen Patentansprüchen. Die Erfindung schafft einen tragbaren Datenträger, insbesondere in Gestalt einer MikroSD-Karte mit einem Träger, einer ersten und einer zweiten Antenne sowie einer mit der ersten und der zweiten Antenne gekoppelten Verarbeitungseinheit. Der Datenträger zeichnet sich dadurch aus, dass über die Verarbeitungseinheit mittels der ersten Antenne ein Feld erzeugbar ist, das bei einer sendenden Kommunikation des Datenträgers mit einem Lesegerät eine Modulation eines Lesegerätfelds bewirkt, wobei zur Erzeugung des Felds durch die Verarbeitungseinheit eine Frequenz des Lesegeräts verarbeitbar ist. Über die zweite Antenne wird dabei die Frequenz des Lesegerätfelds durch die Verarbeitungseinheit ausgewertet. Weiter sind die erste und die zweite Antenne derart zueinander angeordnet, dass die zweite Antenne nicht oder minimal von der ersten sendenden Antenne beeinflusst ist.

Die Erfindung schafft weiter ein Verfahren zum Betreiben eines Datenträgers der oben bezeichneten Art, bei dem über die Verarbeitungseinheit mittels der ersten Antenne ein Feld erzeugt wird, das bei einer sendenden Kommunikation des Datenträgers mit einem Lesegerät eine Modulation eines Lesegerätfelds bewirkt, wobei zur Erzeugung des Felds durch die Verarbeitungseinheit eine Frequenz des Lesegeräts verarbeitet wird. Über die zweite Antenne wird die Frequenz des Lesegerätfelds durch die Verarbeitungseinheit ausgewertet. Dabei beeinflusst die erste Antenne im Sendebetrieb die zweite Antenne nicht oder nur minimal.

Durch die zwei voneinander unabhängigen Antennen in entkoppelter Anordnung kann trotz einem aktiven Senden über die erste Antenne die Frequenz des Lesegerätfelds über die zweite Antenne weiter ausgewertet werden. Unter der entkoppelten Anordnung der zwei Antennen wird dabei eine Anordnung verstanden, bei der das durch die erste Antenne erzeugte Feld nicht in die zweite Antenne einkoppelt.

Im Rahmen der vorliegenden Beschreibung kann die erste Antenne als Sendeantenne und die zweite Antenne als Empfangsantenne verstanden werden.

Zweckmäßigerweise sind die erste und die zweite Antenne derart zueinander angeordnet, dass das Ringintegral über den magnetischen Fluss des von der ersten Antenne ausgesendeten Signals durch die zweite Antenne Null ist. Dies ist dann der Fall, wenn sich magnetische Feldlinien unterschiedlicher Richtung und Feldstärke in der zweiten Antenne, d.h. deren Spule, über die Gesamtfläche gegenseitig aufheben oder wenn der Winkel der Feldlinien zur Spulenachse der zweiten Antenne exakt 90° beträgt.

Wahlweise ist die erste Antenne auf einem Ferritkern aufgebracht und mit ihrer Spulenachse orthogonal zu der Spulenachse der zweiten Antenne angeordnet, welche als planare Antenne ausgebildet ist.

Wahlweise sind die erste Antenne und/oder die zweite Antenne eine planare Antenne, welche planar zu einer Hauptfläche des Trägers angeordnet sind. Dabei können die erste und die zweite Antenne zumindest teilweise übereinander angeordnet sein. Vorzugsweise ist der Grad einer Überlappung derart gewählt, dass sich Feldlinien unterschiedlicher Richtung in der Innenfläche der zweiten Antenne in der Summe aufheben.

Ebenso kann vorgesehen sein, dass die erste und die zweite Antenne koaxial zueinander angeordnet sind. Beispielsweise kann die erste Antenne ringförmig ausgebildet sein. Die zweite Antenne umfasst dann zwei konzentrisch zueinander verlaufende Windungen, die optional in der gleichen Ebene angeordnet sind. Die zwei Windungen der zweiten Antenne sind bezüglich der ersten Antenne derart angeordnet und bemessen, dass sich ein gleicher Kopplungsfaktor der einen Windung und der ersten Antenne sowie der anderen Windung der ersten Antenne einstellt. Dies kann durch die Wahl entsprechender Durchmesser der Windungen der zweiten Antenne in Relation zum Durchmesser der ebenfalls ringförmigen ersten Antenne bewirkt werden. Die Windung der ersten Antenne liegt mit anderen Worten zwischen den beiden Windungen der zweiten Antenne, wobei sämtliche Windungen konzentrisch bzw. koaxial zueinander angeordnet sind. Der gleiche Kopplungsfaktor kann dadurch erzielt werden, dass das Verhältnis des Durchmessers der größeren Windung der zweiten Antenne zum Durchmesser der Windung der ersten Antenne gleich gewählt wird zum Verhältnis des Durchmessers der Windung der ersten Antenne zum Durchmesser der kleineren Windung der zweiten Antenne.

In einer weiteren Ausgestaltung ist eine Strommessvorrichtung zur Messung des Stroms durch die erste Antenne vorgesehen, aus welcher ein Korrekturparameter zur Kompensation einer in die zweite Antenne beim Senden der ersten Antenne induzierten Spannung ermittelbar ist. Zweck der Strommessvorrichtung ist es, Fertigungstoleranzen der Antennen oder durch parasitäre kapazitive Kopplung zwischen den Antennen induzierte Spannungen zu kompensieren.

Die Erfindung wird nachfolgend näher anhand von Ausführungsbeispielen in der Zeichnung erläutert. Es zeigen:

Fig.1 einen Datenträger mit einer orthogonalen Antennenstruktur in perspektivischer Darstellung und in einer Draufsicht,

Fig. 2a bis 2c verschiedene Ausführungsbeispiele eines Datenträgers mit einer erfindungsgemäßen Antennenstruktur,

Fig. 3      ein Ausführungsbeispiel einer als Interfacebaustein ausgebildeten Verarbeitungseinheit in einem erfindungsgemäßen Datenträger,

Fig. 4      einen bekannten Datenträger mit einer planaren Antennenstruktur, wobei der Datenträger in einer Einbausituation in einem Lesegerät dargestellt ist, in welcher eine Kopplung zwischen den zwei Antennen des Datenträgers möglich ist,

Fig. 5      eine schematische Darstellung einer einzelnen Windung einer Antenne, welche in einer elektronisch verschiebbaren Antenne zum Einsatz kommt,

Fig. 6      eine schematische Darstellung einer elektronisch verschiebbaren Antenne mit einer Mehrzahl an Windungen und Antennenanschlüssen zur Beeinflussung einer Kopplung zwischen den zwei Antennen des Datenträgers bei Verwendung in einem Endgerät,

Fig. 7      ein in der Antenne gemäß Fig. 6 eingezeichnetes Koordinatensystem zur Illustration der Verschiebung der Position der Antenne,

Fig. 8      eine schematische Darstellung eines Datenträgers, bei dem sich eine planare Antenne entlang einer Richtung verschieben lässt,

Fig. 9      einen Datenträger, in dem sich eine planare Antenne gleichzeitig in zwei Richtungen verschieben lässt,

Fig. 10      einen Datenträger, bei dem sich die Position einer Stabantenne längs einer Verschiebungsachse verschieben lässt,

Fig.11      eine Darstellung eines Datenträgers mit einer drei Antennen umfassenden Antennenstruktur, bei der sich die Position jeder Antenne der Antennenstruktur elektronisch verschieben lässt,

Fig. 12      eine schematische Darstellung eines Datenträgers, bei dem mehrere Teilspulen einer Stabantenne mit einer Mehrzahl an Antennenanschlüssen zur elektronischen Verschiebung illustriert sind,

Fig. 13      eine Draufsicht auf eine in mehreren Teilantennen unterteilte Stabantenne, welche sich elektronisch verschieben lässt,

Fig. 14      eine aus dem Stand der Technik bekannte Verarbeitungseinheit zur Realisierung einer aktiven Lastmodulation, und

Fig. 15      ein Blockschaltbild einer kontaktlosen Energieversorgung für die Durchführung einer aktiven Lastmodulation eines erfindungsgemäßen Datenträgers.

Ein erfindungsgemäßer Datenträger ermöglicht es, das Signal eines Lesegeräts auch während des Sendebetriebs des Datenträgers mit aktiver Lastmodulation zu empfangen, ohne dass das Signal des Lesegeräts durch das eigene Sendesignal des Datenträgers überdeckt wird. Ermöglicht wird dies durch einen Datenträger mit zwei Antennen, die derart zueinander angeordnet sind, dass die das Signal des Lesegeräts empfangende Antenne nicht oder nur minimal von dem von der Sendeantenne ausgesendeten Signal beeinflusst ist. Hierdurch ist es möglich, das empfangene Signal des Lesegeräts zur Synchronisation der Sendefrequenz des Datenträgers mit der Sendefrequenz des Lesegeräts einzusetzen.

Hierzu wird eine erste Antenne bzw. Sendeantenne 20 gegenüber einer zweiten Antenne bzw. Empfangsantenne 10 erfindungsgemäß räumlich so angeordnet, dass in die Empfangsantenne 10 kein oder nur ein minimales Signal eingekoppelt wird. Ein Signal wird allgemein in eine Spule immer dann eingekoppelt, wenn das Ringintegral über den magnetischen Fluss $\Phi$ durch diese Spule größer als Null ist. Dieser Zusammenhang kann beispielsweise dem "RFID-Handbuch" in Kapitel 4.1.6 und 4.1.9.2 von Klaus Finkenzeller entnommen werden. Das Integral über den magnetischen Fluss $\Phi$ ist genau dann Null, wenn sich magnetische Feldlinien unterschiedlicher Richtung und Feldstärke in der Empfangsspule über die Gesamtfläche gegenseitig aufheben oder wenn der Winkel der Feldlinien zur Spulenachse exakt 90° beträgt.

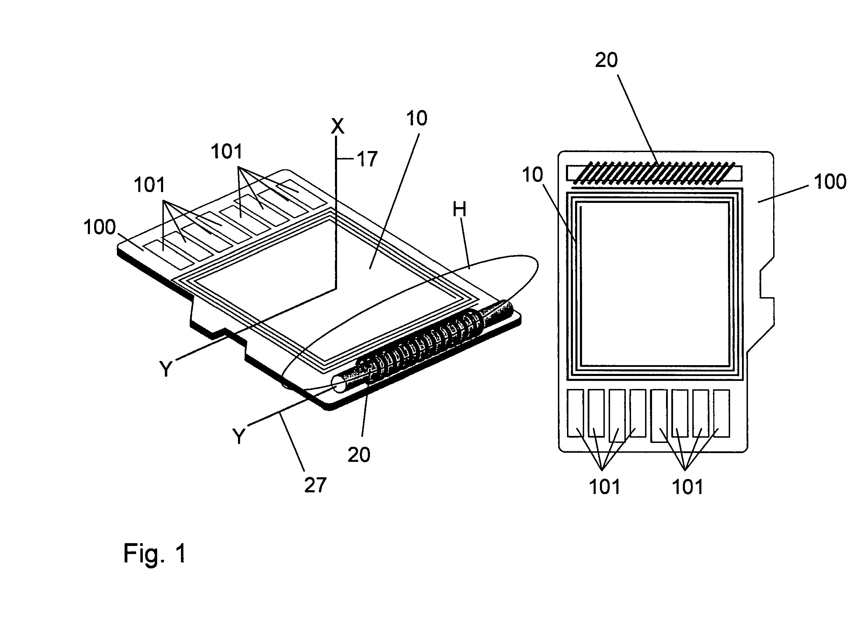

Eine beispielhafte Anordnung eines Datenträgers mit einem sog. orthogonalen Antennenaufbau ist in Fig.1 dargestellt, wobei zwischen den Spulenachsen 17, 27 der Antennen 10, 20 ein exakter 90°-Winkel eingehalten ist. Die Antennen 10, 20 sind auf einem Träger, beispielsweise in Gestalt einer MikroSD-Karte, aufgebracht. Die Empfangsantenne 10 ist als planare Antenne ausgebildet, wobei deren Windungen parallel zur Ebene des Datenträgers 100 auf diesem aufgebracht sind. Die Sendeantenne 20 ist eine Stabantenne, beispielsweise in Gestalt einer Ferritantenne oder SMD-Spule. Die Spulenachse 17 der Empfangsantenne 10, welche orthogonal zur Ebene des Datenträgers 100 verläuft, ist in einem 90°-Winkel zu der Spulenachse 27 der Sendeantenne 20 ausgebildet, welche parallel zur Ebene des Trägers 100 und einer y-Achse eines x-y-Koordinatensystems verläuft. Die Spulenachse 17 verläuft parallel zur x-Achse dieses Koordinatensystems. Mit H ist eine durch die Sendeantenne 20 erzeugte Feldlinie gekennzeichnet. Darüber hinaus weist der in Fig. 1 dargestellte Datenträger 100 eine Anzahl an Anschlusskontakten 101 auf, über welche der Datenträger kontaktbehaftet kontaktierbar ist.

Die von der Sendeantenne 20 beim Senden erzeugten Feldlinien verlaufen bei dieser Anordnung maximal entlang der Oberfläche der Empfangsantenne 10, durchdringen jedoch nicht die Innenfläche der Empfangsantenne 10. Somit wird in der Empfangsantenne keine Spannung induziert. Die Empfangsantenne 10 wird damit von Signalen, die von der Sendeantenne 20 erzeugt werden, nicht beeinflusst. Wesentlich für diesen Umstand ist, dass zwischen den Spulenachsen 17 und 27 der Winkel von 90° möglichst genau eingehalten wird.

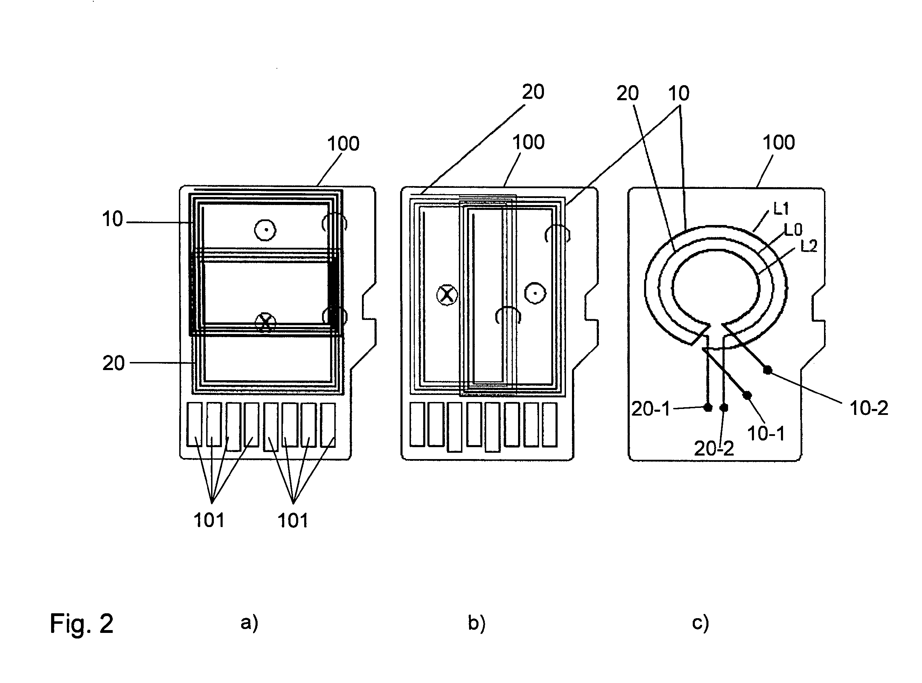

Die Figuren 2a) bis 2c) zeigen weitere Ausgestaltungsmöglichkeiten eines erfindungsgemäßen Datenträgers. In den Figuren 2a) und 2b) sind die Empfangsantenne 10 und die Sendeantenne 20 als planare Antennen parallel zur Ebene des Trägers 100 ausgebildet und so angeordnet, dass sie teilweise übereinander liegen, d.h. überlappen. Wird die Sendeantenne 20 betrieben, so gibt es eine relative Anordnung der Empfangsantenne 10 zur Sendeantenne 20, bei der das Integral über den magnetischen Fluss F genau Null ergibt. Dies erklärt sich dadurch, dass die von der Sendeantenne 20 erzeugten magnetischen Feldlinien innerhalb und außerhalb der Antennenspule in jeweils unterschiedlicher Richtung verlaufen. Der Grad der Überlappung der beiden Antennen 10, 20 wird nun so gewählt, dass sich diese Feldlinien unterschiedlicher Richtung, in der Innenfläche der Empfangsantenne 10 in der Summe (gleichbedeutend mit dem Integral über die Fläche) genau aufheben.

Fig. 2c) zeigt eine koaxiale Anordnung von Sende- und Empfangsantenne 20, 10 zueinander. Die Sendeantenne 20 ist ringförmig ausgebildet und weist zwei Antennenanschlüsse 20-1, 20-2 auf. Ihre einzige Windung ist mit L0 gekennzeichnet. Die Empfangsantenne umfasst zwei ringförmige Windungen L1, L2, welche an einem Ende kurzgeschlossen und am anderen Ende über Antennenanschlüsse 10-1,10-2 kontaktierbar sind. Die Windungen L1, L2 der Empfangsantenne 10 sind konzentrisch auf gleicher Ebene angeordnet. Konzentrisch bedeutet, dass diese einen gemeinsamen Mittelpunkt mit der Windung L0 der Sendeantenne 20 aufweisen. Die Durchmesser D der Windungen L0, L1, L2 sind so gewählt, dass gilt:

$$D_{L1} > D_{L0} > D_{L2} \qquad (1).$$

Die Durchmesser der Windungen $D_{L1}$ und $D_{L2}$ sind so gewählt, dass das Verhältnis zum Durchmesser $D_{L0}$ der Sendeantenne 20 für beide Anordnungen gleich ist, d.h.

$$\frac{D_{L1}}{D_{L0}} = \frac{D_{L0}}{D_{L2}} \qquad (2).$$

Dies hat zur Folge, dass sich zwischen den Windungen L1 und L0 sowie zwischen den Windungen L0 und L2 ein gleicher Kopplungsfaktor k einstellt. Wird in der Sendeantenne 20 ein magnetisches Feld erzeugt, so führen die für die Windungspaare L1, L0 und L2, L0 identischen Kopplungsfaktoren $k_{10}$ und $k_{20}$ dazu, dass die in den Windungen L1 und L2 induzierte Wechselspannungen den gleichen Betrag aufweisen und sich an den Antennenanschlüssen gegenseitig aufheben.

Eine nicht zu verhindernde zusätzliche magnetische Kopplung $k_{21}$ zwischen den Windungen L1 und L2 führt dazu, dass sich die in Gleichung (2) angegebenen Durchmesserverhältnisse nicht exakt, sondern nur in sehr guter Näherung ergeben. Durch entsprechende geringfügige Anpassung der Durchmesser $D_{L1}$ und $D_{L2}$ kann die Antennenanordnung trotzdem so eingestellt werden, dass die in den Windungen L1 und L2 induzierte Wechselspannung den gleichen Betrag aufweist.

Im Normalbetrieb, in dem die Sendeantenne ein magnetisches Wechselfeld erzeugt, ist die Ausgangsspannung an den Antennenanschlüssen 10-1, 10-2 der Empfangsantenne 20 annähernd Null. Ein von außen, durch das externe Lesegerät eingekoppeltes Magnetfeld induziert in den Windungen L1, L2 unterschiedliche Spannungen aufgrund unterschiedlicher Kopplungsfaktoren, so dass sich die beiden Spannungen am Anschluss nicht aufheben können. Ein außerhalb der Speicherkarte erzeugtes magnetisches Wechselfeld induziert daher in der Empfangsantenne 10 eine in der Summe deutlich detektierbare elektrische Spannung.

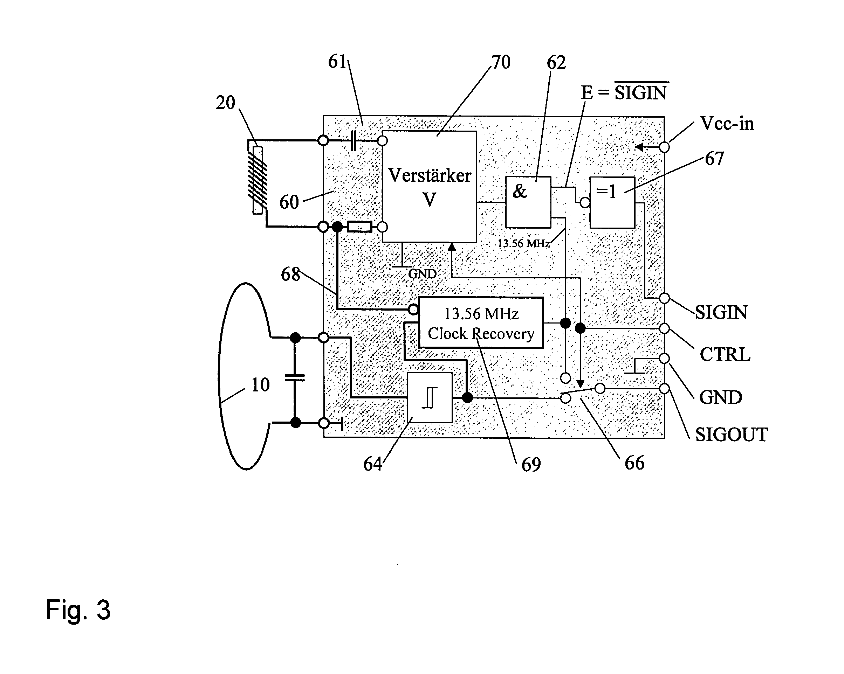

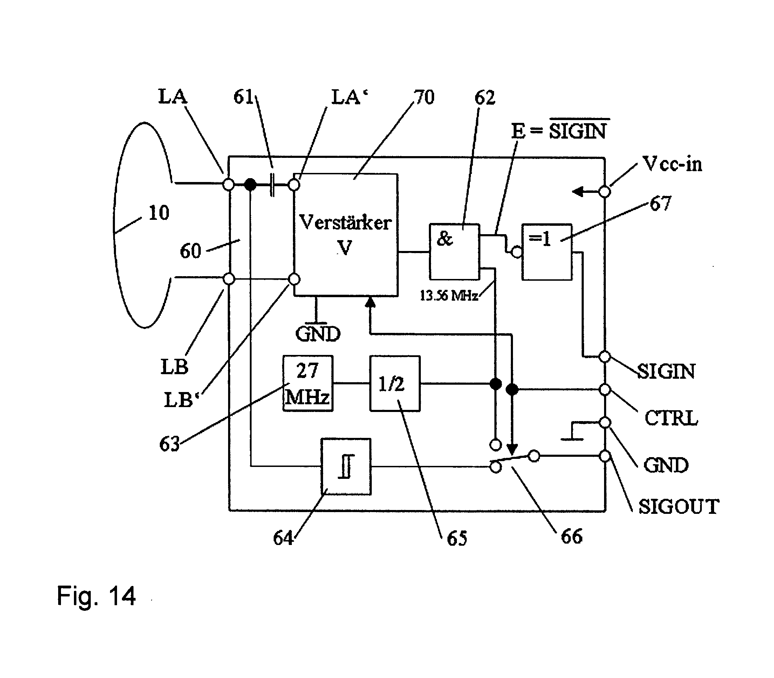

Bedingt durch Fertigungstoleranzen oder durch parasitäre kapazitive Kopplung zwischen den Antennen 10, 20 lässt sich bei allen vorgenannten Ausführungsformen die in der Empfangsantenne 10 durch die Sendeantenne 20 induzierte Spannung nie exakt auf Null einstellen. Es ist daher vorgesehen, den Strom durch die Sendeantenne 20 zu messen, um einen Korrekturparameter zur Kompensation einer in die Empfangsantenne beim Senden der Sendeantenne induzierten Spannung zu ermitteln. Dies wird besser anhand eines Vergleichs der in den Figuren 3 und 14 dargestellten Blockschaltbilder einer bekannten Verarbeitungseinheit für eine aktive Lastmodulation (Fig. 14) und eine in einem erfindungsgemäßen Träger erweiterte Verarbeitungseinheit (Fig. 3) ersichtlich.

Fig. 14 zeigt schematisch den Aufbau einer Verarbeitungseinheit eines bekannten Datenträgers. Genauer stellt die Verarbeitungseinheit einen Interfacebaustein für einen Chip des Datenträgers mit einer S$^2$C-Schnittstelle dar.

Der Interfacebaustein 61 ist mit einem Signaleingang SIGIN und einem Signalausgang SIGOUT ausgestattet, um Signale von der Antenne 10 zu dem Chip (nicht gezeigt) und vom Chip, welcher das modulierte Hilfsträgersignal generiert, zu der Antenne 10 zu leiten. Ein Signal an SIGOUT besteht aus einem 13,56 MHz TTL-Signal, welches gegebenenfalls ein Modulationssignal eines entfernten Lesegerätes enthält. Der Interfacebaustein 60 umfasst einen Verstärker 70, ein AND-Gatter 62, einen Oszillator 63, einen Frequenzteiler 65, einen Signalformer 64 und einen Schalter 66. Der Verstärker 70 kann beispielsweise ein Gegentaktverstärker mit (digitalen) Push-Pull Ausgangsverstärkern (nicht gezeigt) sein. Des Weiteren besitzt der Interfacebaustein 60 zwei Antennenanschlüsse LA und LB und eine Serienkapazität 61. Darüber hinaus besitzt der Interfacebaustein 60 Anschlüsse Vcc-in und GND zur Energieversorgung und einen Steuereingang CTRL, um zwischen einem Sende- und Empfangsbetrieb des Interfacebausteins mittels des Schalters 66 umzuschalten.

Das extern modulierte Hilfsträgersignal wird über eine geeignete Schnittstelle (z.B. S2C Interface von Philips) an den Signaleingang SIGIN des Interfacebausteins 61 geführt und dort wie nachfolgend beschrieben weiter verarbeitet. Das Hilfsträgersignal ist beispielsweise ein 848kHz TTL-Signal, welches ASK (ISO/IEC 14443 A, Manchester Code) oder BPSK (ISO/IEC 14443 B, NRC Code) moduliert ist.

Befindet sich der Interfacebaustein im Sendebetrieb, d.h. es findet eine kontaktlose Datenübertragung an ein externes Lesegerät oder ein NFC-Gerät statt, so wird am Signaleingang SIGIN durch den Smart-Card-Chip ein moduliertes Hilfsträgersignal eingespeist und optional in einem Inverter 67 invertiert. Das invertierte Signal E wird im AND-Gatter 62 als Trägerfrequenzmodulator mit einem 13,56 MHz Trägerfrequenzsignal verknüpft und dem Verstärker 70 zugeführt.

Die Antenne 10 und die Serienkapazität 61 bilden einen Reihenschwingkreis, welcher mit den Ausgängen LA' und LB' des Verstärkers 70 verbunden ist, so dass der im Resonanzfall fließende HF-Strom im Antennenschwingkreis nur durch die ohmschen Widerstände in den Leitungen und im Verstärker 70 begrenzt wird. Dadurch wird eine größtmögliche Sendeleistung des Interfacebausteins erreicht.

Ferner kann dem Smart-Card-Chip über den Schalter 66 im Sendebetrieb über den Ausgang SIGOUT ein konstantes 13,56 MHz Taktsignal vom Oszillator 63 zugeführt werden, sofern er ein solches (externes) Taktsignal zum Betrieb benötigt, um einen genauen Takt (Timing) einzuhalten. Wie bereits beschrieben, ist dies für eine Kommunikation nach dem Standard ISO 14443 Typ A notwendig.

Im Empfangsbetrieb wird dem Smart-Card-Chip über den Schalter 66 und den Ausgang SIGOUT ein digitalisiertes, von der Antenne 10 abgegriffenes Empfangssignal zugeführt. Der Signalformer 64 funktioniert dabei als Verstärker, um auch schwache Signale empfangen zu können, und als Schwellenschalter, um am Ausgang des Signalformers ein digitales Ausgangssignal zur Verfügung zu stellen. Beispielsweise kann als Schwellenschalter ein Schmitt-Trigger eingesetzt werden, der abhängig vom Über- bzw. Unterschreiten eines vorbestimmten Schwellenwerts einen eindeutigen High- bzw. Low-Pegel ausgibt.

Über den Steuereingang des Gegentaktverstärkers 70 werden die Push-Pull-Ausgänge der Ausgangstreiber auf GND geschaltet, so dass aus der Antenne 10 und dem Kondensator 61 ein Parallelschwingkreis entsteht. Um Energie zu sparen, kann der Verstärker 70 im Empfangsbetrieb des Interfacebausteins in einen Stromsparmodus geschaltet werden.

Der Oszillator 63 erzeugt das im Sendebetrieb benötigte 13,56 MHz Trägerfrequenzsignal. Kann der Oszillator im Empfangsbetrieb nicht abgeschaltet werden, da sein Einschwingvorgang ggf. zu lange dauert, so wird der Oszillator im Empfangsbetrieb des Interfacebausteins bevorzugt auf einer Vielfachen N des Trägerfrequenzsignals (z.B. 27,120 MHz) betrieben, um das ggf. schwache Empfangssignal nicht durch Übersprechen zu stören. Im Sendebetrieb kann dann durch Teilung des Oszillatorsignals durch N mittels eines optionalen Teilers 65 das benötigte 13,56 MHz Signal erzeugt werden.

Der Steuersignaleingang CTRL für ein Steuersignal ist optional, da sich das Steuersignal zum Umschalten des Betriebsmodus auch aus dem Eingangssignal am Signaleingang SIGIN ableiten lässt. Beispielsweise kann ein monostabiles Zeitglied (Monoflop) aus dem Eingangssignal an SIGIN ein Steuersignal erzeugen. Es gibt nur dann ein aktives Eingangssignal, wenn der Chip Daten senden möchte. Triggert man nun mit der ersten Flanke des Eingangssignals das monostabile Zeitglied, erhält man als Ausgang des Zeitgliedes ein Steuersignal. Insbesondere sollte das Zeitglied nachtriggerbar realisiert werden und so eingestellt sein, dass es etwa nach einer Zeit von der 1 bis 2-fachen Bitdauer (also maximal der FGT, Frame Guard Time) in den Ausgangszustand zurückfällt. Somit steuert das Steuersignal wieder einen Empfangsbetrieb an, wenn keine Daten mehr gesendet werden.

Fig. 3 zeigt die erfindungsgemäße Erweiterung zur Synchronisierung der Sendefrequenz des Datenträgers mit der Sendefrequenz des Lesegeräts bei einem Transponder mit aktiver Lastmodulation. Das analoge Frontend des Transponders des Datenträgers umfasst die Empfangsantenne 10, die Sendeantenne 20 sowie eine Schaltung 69 zur Ableitung eines 13,56 MHz Clocksignals aus dem von dem Lesegerät empfangenen Signal. Die Schaltung 65 kann ein einfacher, geregelter Verstärker mit Begrenzung, aber auch eine PLL (Phase Locked Loop) sein, welche das von der Empfangsantenne 10 empfangene Signal als Referenzfrequenz verwendet.

Zur Messung des durch die Sendeantenne 20 fließenden Stroms ist die Antenne über eine Leitung 68 mit der Schaltung 69 verbunden, über die der Messwert als äquivalente Spannung $U_{TX}$ eingespeist wird. Die Spannung $U_{TX}$ wird dazu verwendet, eine in der Empfangsspule beim Senden ungewollt induzierte Spannung durch eine gegenphasige Spannung $U'_{TX}$ gleichen Betrags zu kompensieren.

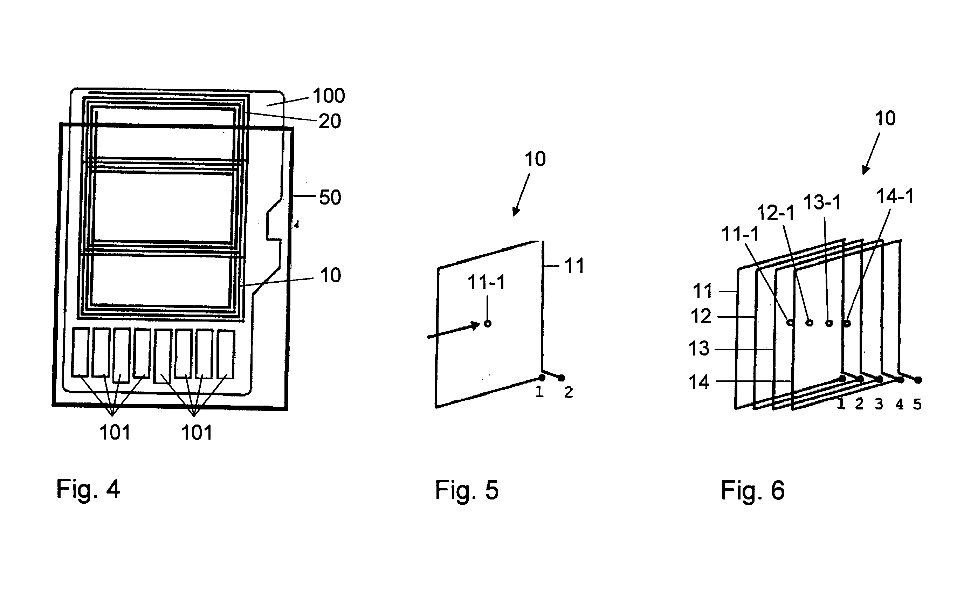

Die weiteren in Verbindung mit Figuren 4 bis 13 beschriebenen Ausführungsvarianten ermöglichen darüber hinaus eine elektronische Verschiebung der Position einer Antenne auf dem Träger des tragbaren Datenträgers. Die elektronische Verschiebung lässt sich dabei sowohl bei planaren Antennen als auch bei Stabantennen, z.B. Ferrit- oder SMD-Antennen, realisieren. Die hierbei zu Grunde liegende Problematik wird zunächst anhand von Fig. 4 beschrieben.

Bei einer Antennenstruktur mit zwei planaren Antennen auf einem Träger besteht das Problem, dass bei der Verwendung des tragbaren Datenträgers in einem Endgerät metallische Bauteile des Endgeräts eine Verschiebung der Symmetrie erzeugen. Durch das Einstecken des Datenträgers in ein Endgerät, wie z.B. ein Mobilfunktelefon, kann, bedingt durch Metallflächen in der Nähe des Datenträgers, eine Verstimmung der Antennenstruktur auftreten. Der Grund hierfür liegt darin, dass in der Metallfläche Wirbelströme induziert werden, so dass sich die Resonanzfrequenz einer Antenne der Antennenstruktur zu einer höheren Frequenz hin verschiebt. Diese Situation ist exemplarisch in Fig. 4 dargestellt. Auf dem Träger 100 sind zwei Antennen 10, 20, jeweils in planarer Form, aufgebracht. Die Antennen 10, 20 sind versetzt zueinander angeordnet. Mit dem Bezugszeichen 50 ist ein metallischer Rahmen eines den Datenträger aufnehmenden Slots des Endgeräts dargestellt. Dieser Rahmen 50 deckt nicht die gesamte Antennenstruktur ab (Teile der Windungen der Antenne 20 sind außerhalb des metallischen Rahmens 50 angeordnet), wodurch die beschriebene Verschiebung der Symmetrie verursacht ist.

Durch die nachfolgend näher beschriebene elektronische Verschiebung einer Antenne kann nicht nur eine effektive Sendeleistung der Antenne des Datenträgers optimiert werden, wenn dieses in einem Endgerät verbaut und gegebenenfalls durch dessen Komponenten beeinflusst ist. Ebenso ist es möglich, mittels der vorgeschlagenen elektronischen Verschiebung der Position einer Antenne eine interne Abstimmung vorzunehmen, welche die bei dem erfindungsgemäßen Datenträger unerwünschte gegenseitige Beeinflussung weiter minimieren kann.

Zunächst wird die elektronische Verschiebung der Position der Antenne anhand einer planaren Antenne beschrieben.

Zur Realisierung einer planaren, elektronisch verschiebbaren Antenne wird diese aus einer Mehrzahl an gleich großen Windungen gebildet. Beispielsweise sind die Windungen, wie dies exemplarisch für eine einzelne Windung in Fig. 5 dargestellt ist, in Form eines Parallelogramms ausgestaltet. Die einzelne Windung 11 weist an ihren jeweiligen Enden benachbart zueinander Spulenanschlüsse bzw. Anschlüsse 1, 2 auf. Ein sich aus der Gestalt der Windung 11 ergebender Spulenmittelpunkt ist in Fig. 5 mit 11-1 gekennzeichnet. Die vertikal verlaufenden Abschnitte der Windung 11 sind beispielsweise auf einer Oberseite eines Trägers 100 (z.B. den Träger 100 einer MikroSD-Karte, wie dieser in Fig.1 dargestellt ist) aufgebracht. Demgegenüber sind die schräg nach rechts oben verlaufenden Abschnitte der Windung auf einer Unterseite bzw. in einer Zwischenlage des Trägers angeordnet. An jeweiligen Schnittpunkten sind Durchkontaktierungen (Durchsteiger) realisiert, um eine elektrische Verbindung zwischen den jeweiligen Abschnitten der Windung herstellen zu können. Die Anschlüsse 1 und 2 repräsentieren den Abgriff der hier dargestellten Windung 11.

Fig. 6 zeigt eine planare Antenne 10 mit beispielhaft vier Windungen 11, 12, 13,14. Die Anzahl der Windungen kann prinzipiell beliebig gewählt sein. Die Antenne 10 ist derart ausgestaltet, dass insgesamt fünf Anschlüsse 1, 2, 3, 4, 5 vorgesehen sind, d.h. jede Windung kontaktierbar ist. Mit 11-1, 12-1, 13-1,14-1 sind die jeweiligen Spulenmittelpunkte der Windungen 11,12,13,14 gekennzeichnet. Die jeweiligen vertikal verlaufenden Abschnitte jeweiliger Windungen 11,12,13,14 sind beispielsweise auf der Oberseite des nicht dargestellten Trägers angeordnet. Demgegenüber sind die schräg nach rechts oben verlaufenden weiteren Abschnitte auf einer Unterseite oder in einer Zwischenlage des Trägers vorgesehen. Die elektrische Verbindung jeweiliger Abschnitte einer Windung 11,12,13,14 erfolgt, wie erläutert, über Durchkontaktierungen in dem Träger.

Jede einzelne Windung 11,12,13,14 kann über die ihr zugeordneten Anschlüsse 1-2, 2-3, 3-4, 4-5 einzeln abgegriffen werden. Die Anschlüsse bzw. Abgriffe sind derart realisiert, dass die Antenne bei einem Abgriff an den Anschlüssen 1 und 5 mit vier Windungen gebildet ist. Die Antenne 10 der Fig. 6 weist, da jede einzelne der Windungen 11,12,13,14 einzeln abgegriffen werden kann, insgesamt vier gleichartige Teilantennen auf. Eine jeweilige Teilantenne ist hierbei aus einer einzelnen Windung gebildet. Werden zwei der Antennenanschlüsse, z.B.1-2, 2-3, 3-4, 4-5, für einen Anschluss einer der vier gleichartigen Teilantennen der Antenne ausgewählt, so lässt sich die Position der (Teil-)Antenne elektronisch verschieben. Jede der Teilantennen ist dabei aufgrund der gleichen Anzahl an Windungen bei einer gleichen Frequenz betreibbar.

Soll eine aus der Antenne gebildete Teilantenne mit mehreren Spulenwindungen realisiert werden, so kann beispielsweise eine Antenne mit zwei Windungen durch die Kontaktierung an den Abgriffen 1-3, 2-4 oder 3-5 realisiert werden. Insgesamt sind hier drei gleichartige Teilantenne mit gleicher Frequenz aus der Antenne 10 realisierbar. Eine aus der Antenne gebildete Teilantenne mit drei Windungen könnte durch eine Kontaktierung der Abgriffe 1-4 oder 2-5 realisiert werden. Hier existieren zwei gleichartige Teilantennen, welche eine gleiche Frequenz aufweisen. Es versteht sich, dass sich der Begriff "gleiche Frequenz" immer nur auf jeweilige Teilantennen gleicher Windungszahl bezieht. Antennen mit unterschiedlicher Windungszahl weisen auch unterschiedliche Frequenzen auf.

Zwischen allen Kombinationsmöglichkeiten jeweiliger Teilantennen gleicher Windungszahl ergibt sich hierbei ein unterschiedlicher Spulenmittelpunkt, wodurch die effektiv "wirksame" Teilantenne (welche hier die Antenne repräsentiert) scheinbar auf dem Träger in ihrer Lage verschoben wurde.

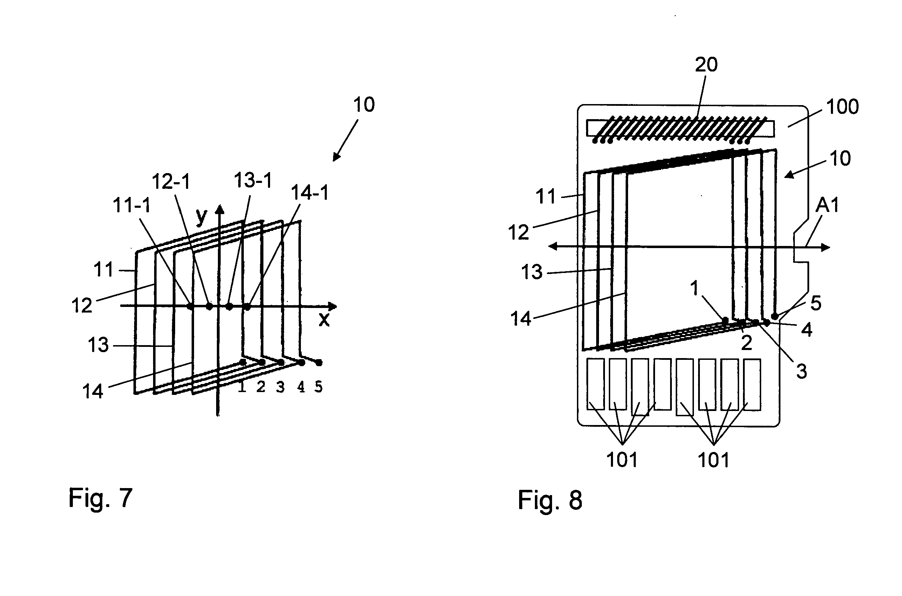

Dies kann beispielsweise der Fig. 7 entnommen werden, in der zusätzlich zu den vier Windungen 11,12,13,14 der Antenne 10 ein Koordinatensystem mit x- und y-Achse eingezeichnet ist. Hierbei ist gut ersichtlich, dass die Spulenmittelpunkte 11-1,12-1,13-1,14-1 jeweiliger Windungen 11, 12, 13, 14 auf der x-Achse gelegen und zueinander verschoben sind.

Die in der Fig. 7 illustrierte planare Antenne 10 ist in Fig. 8 auf einem in Gestalt einer MikroSD-Karte ausgebildeten Träger 100 aufgebracht. Zusätzlich sind die bereits in Verbindung mit Fig. 1 erläuterten Anschlusskontakte 101 zur zusätzlichen oder kontaktbehafteten Kontaktierung des Datenträgers dargestellt. Neben der planaren Antenne 10 ist ferner eine Stabantenne 20 auf dem Träger 100 angeordnet. Die planare Antenne 10 sowie die Stabantenne 20 sind bezüglich ihrer Spulenachsen orthogonal zueinander ausgerichtet. Entsprechend der Beschreibung in Fig. 7 lässt sich die planare Antenne 10 längs der Verschiebungsachse A1 (die der x-Achse des Koordinatensystems in Fig. 7 entspricht) auf dem Datenträger elektronisch verschieben. Hierdurch kann - bei gleicher Frequenz - die für eine Einbausituation optimale (Teil-)Antenne durch Kontaktierung der zugeordneten Anschlüsse ausgewählt werden.

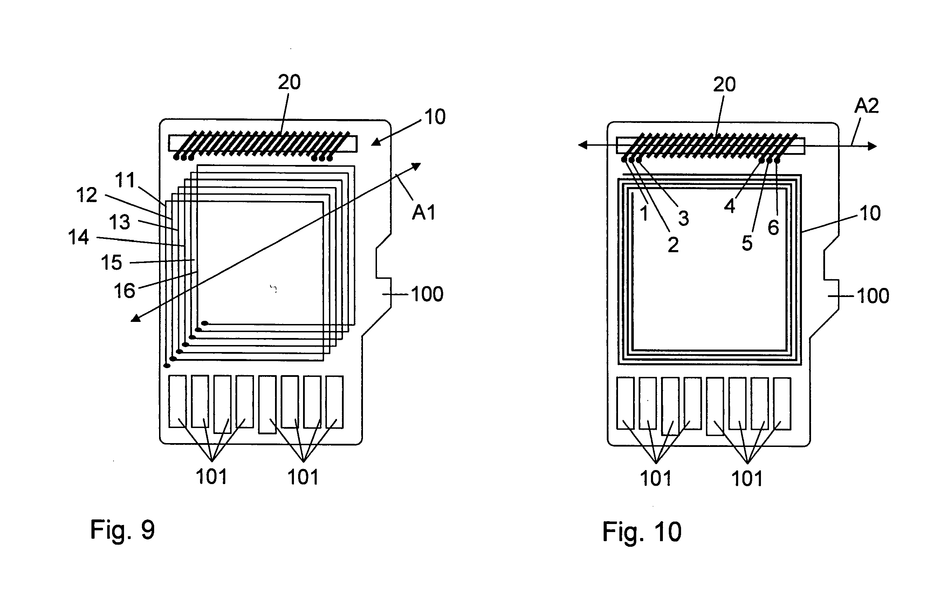

Fig. 9 zeigt eine alternative Ausgestaltungsvariante, bei der sich die planare Antenne 10 gleichzeitig in horizontaler und vertikaler Richtung entlang der eingezeichneten Verschiebungsachse A1 verschieben lässt. Bei der lediglich beispielsweise sechs Windungen aufweisenden, planaren Antenne 10 sind die einzelnen Windungen 11,12,13,14,15,16 derart versetzt zueinander angeordnet, dass die Verschiebungsachse A1 in einem Winkel von etwa 45° in dem Koordinatensystem liegt. Beispielsweise sind wiederum die vertikal verlaufenden Abschnitte jeweiliger Windungen 11,12,13,14,15,16 auf einer Oberseite des Trägers 100 und die horizontal verlaufenden Abschnitte jeweiliger Windungen 11,12,13,14,15 auf einer Unterseite oder in einer Zwischenlage des Trägers 100 angeordnet. Wie bereits beschrieben, erfolgt die Kontaktierung einander zugeordneter Windungsabschnitte durch Durchkontaktierungen in dem Träger 100. Durch die relative Anordnung der einzelnen Windungen zueinander, d.h. einen vertikalen und einen horizontalen Abstand, lässt sich die Lage (d.h. der Winkel) der Verschiebungsachse A1 beeinflussen. Sind die horizontalen und die vertikalen Abstände der beispielhaft im rechten Winkel zu einander angeordneten Windungsabschnitte gleich groß, so ergibt sich eine gleichmäßige Verschiebung in horizontaler und vertikaler Richtung der Zeichnungsebene. Werden die Abstände zwischen den horizontalen und vertikalen Windungsabschnitten jedoch unterschiedlich gewählt, so kann ein anderer Winkel der Verschiebungsachse erzielt werden.

Fig. 10 zeigt eine weitere Ausgestaltungsvariante eines erfindungsgemäßen Datenträgers, bei dem die planare Antenne 10 mehrere Windungen umfasst, wobei lediglich zwei Antennenanschlüsse vorgesehen sind. Demgegenüber weist die Stabantenne 20, bei der eine Vielzahl an Windungen um einen Ferritkern gewickelt ist, mehrere Spulenanschlüsse 1, 2, 3, 4, 5, 6 auf. Hierdurch besteht die Möglichkeit, die horizontale Lage der Stabantenne 20 längs der Verschiebungsachse A2 zu verschieben. Entsprechend der vorangegangenen Beschreibung können beispielsweise die Anschlüsse 1-4, 2-5 oder 3-6 kontaktiert werden. Die in Fig. 10 gezeigten Spulenanschlüsse müssen dabei nicht in zwei an den gegenüberliegenden Enden der Antennen ausgebildeten Gruppen, umfassend die Anschlüsse 1, 2 und 3 sowie 4, 5 und 6, angeordnet sein. Beispielsweise könnten die Anschlüsse 1, 2, 3, 4, 5, 6 auch verteilt über die Gesamtlänge der Stabantenne 20 angeordnet sein.

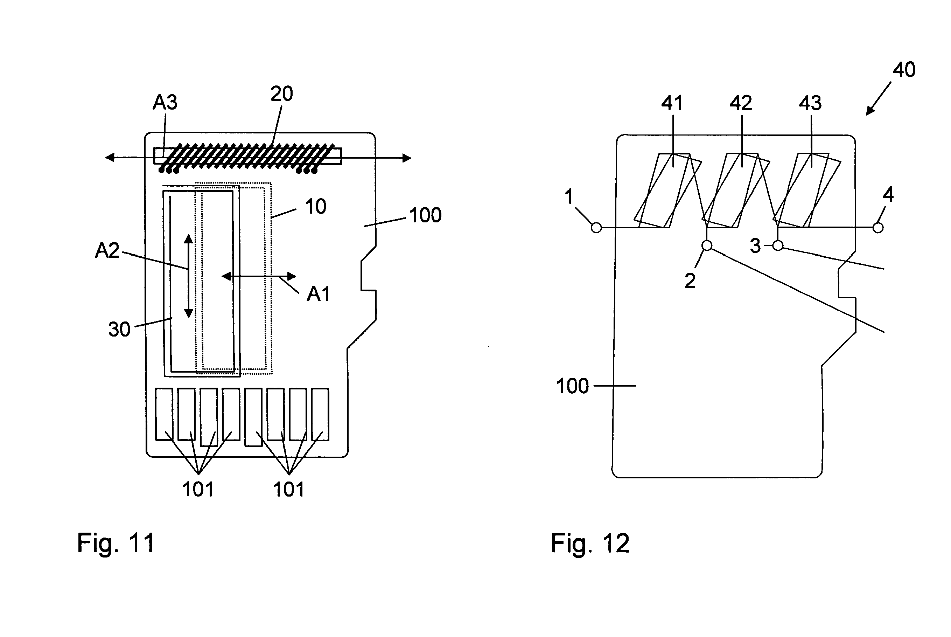

Fig.11 zeigt eine weitere Ausgestaltungsvariante, bei der der Datenträger insgesamt drei Antennen 10, 20, 30 umfasst. Die Antennen 10, 30 sind dabei jeweils als planare Antennen ausgebildet. Die Antenne 20 ist eine der vorangegangenen Stabantenne entsprechende Stabantenne. Die Stabantenne 20 kann in wagrechter Richtung entlang der Verschiebungsachse A3 verschoben werden. Die planare Antenne 10, welche überlappend zu der planaren Antenne 30 auf dem Datenträger 100 angeordnet ist, kann in horizontaler Richtung gemäß der eingezeichneten Verschiebungsachse A1 und die planare Antenne 30 in vertikaler Richtung entlang der eingezeichneten Verschiebungsachse A2 elektronisch verschoben werden.

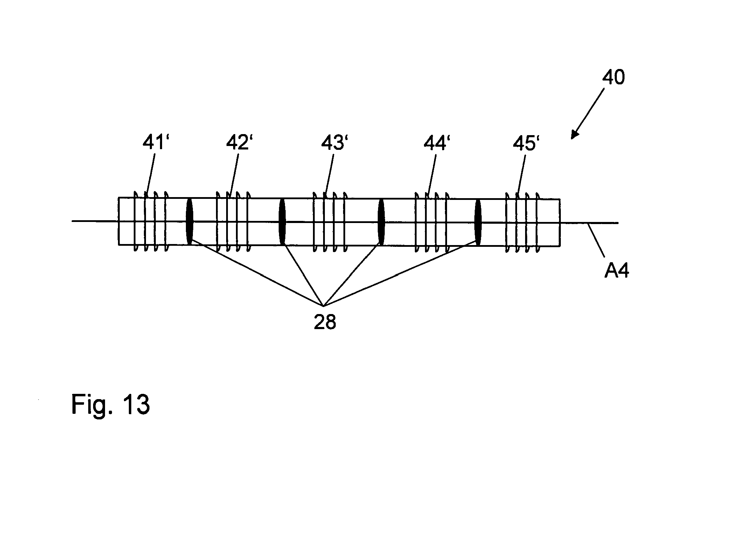

Die Figuren 12 und 13 zeigen ein weiteres Ausführungsbeispiel der möglichen Ausgestaltung einer aus Teilspulen 41, 42, 43 ausgebildeten Antenne 40. Diese weist beispielhaft vier Anschlüsse 1, 2, 3, 4 auf. Die Teilspulen sind bezüglich einer Seitenkante des Datenträgers 100 schräg, jedoch parallel zueinander, auf dem Träger 100 aufgebracht. Durch die Kontaktierung der Anschlüsse 1-3 bzw. 2-4 kann die Lage der aus zwei Teilspulen bestehenden Teilantenne 41+42 bzw. 42+43 in horizontaler Richtung verschoben werden. Es versteht sich, dass jeweilige Spulenachsen der Teilspule in einem 90°-Winkel zur Ebene des Trägers 100 angeordnet sind.

Fig. 13 zeigt ein weiteres Ausführungsbeispiel, in dem eine Stabantenne aus beispielhaft fünf durch Keramikinlays 28 voneinander getrennten Teilspulen 41', 42', 43', 44', 45' gebildet ist. Die Keramikinlays 28 bilden einen Luftspalt aus. Durch entsprechende, in der Figur nicht näher dargestellte Anschlüsse kann eine wahlweise aus einer, zwei oder drei Teilspulen gebildete Teilantenne in beschriebener Weise in horizontaler Richtung (entsprechend der eingezeichneten Verschiebungsachse 4) verschoben werden.

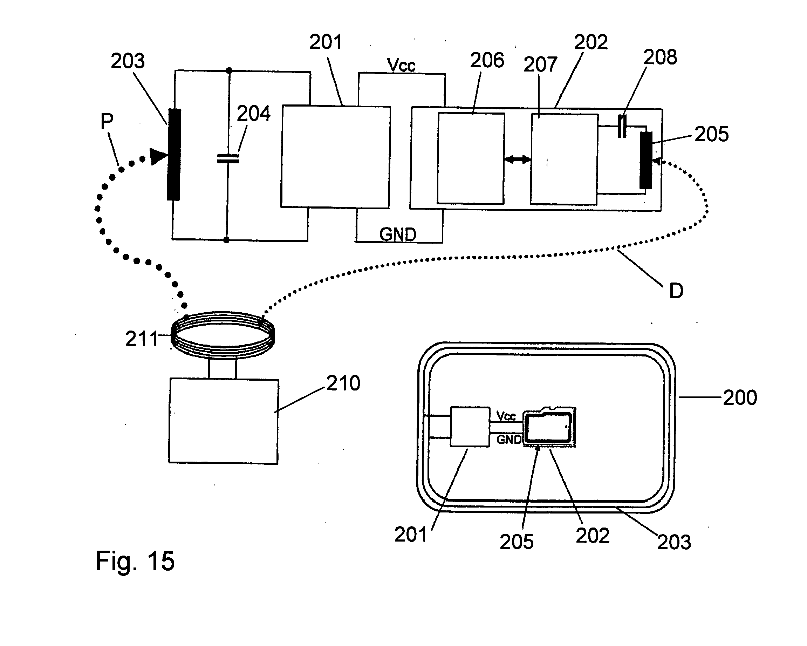

Die im Folgenden mit Bezug aus Fig. 15 beschriebene Adapter ist zunächst unabhängig von der konkreten Ausgestaltung des tragbaren Datenträgers, also insbesondere unabhängig von der Verwendung einer zweiten Antenne im Datenträger.

Die Grundidee der Anordnung eines Datenträgers 202 in einem Adapter 200 ist es, aus einem Feld P eines Lesegerätes sowohl Daten über die Datenträgerantenne 205 zu empfangen als auch die Versorgungsspannung über die Adapterantenne 203 und die kontaktbehaftete Versorgungsspannungs-Schnittstelle des Datenträgers 202 bereit zu stellen. Somit kann der Datenträger kontaktlos Daten empfangen, ohne in einem Endgerät eingesetzt zu sein oder eine eigene Batterie zu benötigen.

Um eine aktive Lastmodulation durchzuführen, wird zur Spannungsversorgung bislang eine lokale Energiequelle, wie z.B. eine Batterie des Datenträgers oder eine Endgerätes, in welchem der Datenträger angeordnet ist, verwendet. In Fig. 15 ist ein kontaktloser Datenträger 202 mit einer aktiven Lastmodulation dargestellt, bei dem aus dem Feld P eines Lesegerätes 210 Energie zum Betrieb des Datenträgers 202 entnommen werden kann. Der Datenträger 202 ist in einem Adapter 200 mit großflächiger Antenne 203 angeordnet. Der Adapter ist vorzugsweise kartenförmig ausgebildet. Die Antenne 203 ist über einen Gleichrichter und Spannungsregler 201 mit dem Datenträger 202 gekoppelt. Das bekannte Interface 207 des Datenträgers 202 zur Kommunikation mittels aktiver Lastmodulation wurde bereits in Verbindung mit Fig. 14 bzw. Fig. 3 beschrieben.

Der Interfacebaustein 207 sowie ein gegebenenfalls in dem Datenträger vorhandenes Secure Element 206 benötigen zum Betrieb eine Spannungsversorgung Vcc. Hierzu wird mittels der Antennenspule 203, welche mit einer Kapazität 204 einen Antennenschwingkreis bildet und mittels dem Gleichrichter und Spannungsregler 201 aus dem Feld des Lesegerätes 210 Energie entnommen und dem Datenträger 202 mit aktiver Lastmodulation zur Energieversorgung zur Verfügung gestellt. Beispielsweise kann die Antennenspule 203 in Form einer ID-1-Karte ausgeführt sein. Die benötigte Schwingkreiskapazität kann durch die Eingangskapazität des Gleichrichters und Spannungsreglers 201 und/ oder durch einen zusätzlich vorgehaltenen Kondensator gebildet sein. Der Datenträger 202 mit aktiver Lastmodulation ist wiederum beispielhaft als MikroSD-Karte ausgeführt, welche in dieser Bauform bereits für Mobilfunktelefone verfügbar ist.

Der Datenträger 202 ist in der Mitte der Antennenspule 203 angeordnet, um so eine möglichst kleine induktive Kopplung zwischen den Antennen 203 und der Antenne 205 des Datenträgers 202 zu erhalten. Die Antenne 203 entnimmt dem Feld des Lesegerätes 210 die zum Betrieb des Datenträgers 202 benötigte Energie P. Der Empfang der Daten D sowie das Zurücksenden der Daten an das Lesegerät 210 erfolgt über die Antenne 205 des Datenträgers 202.

Die Anordnung aus der Antenne 203 und dem Gleichrichter und Spannungsregler 201 ist zweckmäßigerweise mit einer Steckverbindung (Sockel/ Adapter) für den Datenträger 202 ausgestattet, so dass dieser je nach Bedarf in der erfindungsgemäßen Anordnung oder aber auch in einem elektronischen Endgerät (z.B. Mobilfunktelefon) betrieben werden kann.

Des Weiteren kann auf der gezeigten Anordnung ein Energiespeicher, z.B. ein Kondensator oder Akkumulator, vorgesehen werden, welcher vergleichsweise langsam über das von der Antenne 211 des Lesegeräts 210 erzeugte Feld aufgeladen wird und ausreichend Energie vorhält, um das Senden von Daten an das Lesegerät durch den Datenträger 202 ohne Spannungseinbrüche der Spannung Vcc zu ermöglichen.

**Patentansprüche**

1. Tragbarer Datenträger, insbesondere MikroSD-Karte, mit einem Träger (100), einer ersten und einer zweiten Antenne (20,10) sowie einer mit der ersten und der zweiten Antenne (12,10) gekoppelten Verarbeitungseinheit, wobei

    - die erste und die zweite Antenne (20,10) derart zueinander angeordnet sind, dass die zweite Antenne (10) nicht oder minimal von der ersten sendenden Antenne (20) beeinflusst ist,
    - über die Verarbeitungseinheit mittels der ersten Antenne (20) bei einer sendenden Kommunikation des Datenträgers mit einem Lesegerät ein Feld erzeugbar ist, wobei zur Erzeugung des Felds durch die Verarbeitungseinheit eine Frequenz des Lesegeräts verarbeitbar ist;
    - über die zweite Antenne (10) ein Lesegerätfeld empfangen wird;
    **dadurch gekennzeichnet, dass**
    das von der ersten Antenne (20) gesendete Feld eine Modulation des Lesegerätfelds bewirkt, und zur Synchronisation der Sendefrequenz des Datenträgers mit der Sendefrequenz des Lesegerätes das Lesegerätfeld über die zweite Antenne (10) empfangen und dessen Frequenz durch die Verarbeitungseinheit ausgewertet wird.

2. Datenträger nach Anspruch 1, **dadurch gekennzeichnet, dass** die erste und die zweite Antenne (20,10) derart zueinander angeordnet sind, dass das Ringintegral über den magnetischen Fluss des von der ersten Antenne ausgesendeten Signals durch die zweite Antenne (10) null ist.

3. Datenträger nach Anspruch 1 oder 2, **dadurch gekennzeichnet, dass** die erste Antenne (20) auf einem Ferritkern aufgebracht und mit ihrer Spulenachse orthogonal zu der Spulenachse der zweiten Antenne angeordnet ist, welche als planare Antenne ausgebildet ist.

4. Datenträger nach einem der Ansprüche 1 bis 3, **dadurch gekennzeichnet, dass** die erste Antenne (20) und/ oder die zweite Antenne (10) eine planare Antenne sind, welche planar zu einer Hauptfläche des Trägers angeordnet sind.

5. Datenträger nach Anspruch 4, **dadurch gekennzeichnet, dass** die erste und die zweite Antenne zumindest teilweise übereinander angeordnet sind.

6. Datenträger nach Anspruch 5, **dadurch gekennzeichnet, dass** der Grad einer Überlappung derart gewählt ist, dass sich Feldlinien unterschiedlicher Richtung in der Innenfläche der zweiten Antenne (10) in der Summe aufheben.

7. Datenträger nach einem der Ansprüche 1 bis 6, **dadurch gekennzeichnet, dass** die erste und die zweite Antenne (20, 10) koaxial zueinander angeordnet sind.

8. Datenträger nach Anspruch 7, **dadurch gekennzeichnet, dass** die erste Antenne (20) ringförmig ist.

9. Datenträger nach Anspruch 7 oder 8, **dadurch gekennzeichnet, dass** die zweite Antenne (10) zwei konzentrisch zueinander verlaufende Windungen umfasst, die optional in der gleichen Ebene angeordnet sind.

10. Datenträger nach Anspruch 9, **dadurch gekennzeichnet, dass** die zwei Windungen der zweiten Antenne (10) bezüglich der ersten Antenne (20) derart angeordnet und bemessen sind, dass sich ein gleicher Kopplungsfaktor zwischen der einen Windung und der ersten Antenne sowie der anderen Windung und der ersten Antenne einstellt.

11. Datenträger nach einem der Ansprüche 1 bis 10, **dadurch gekennzeichnet, dass** eine Strommessvorrichtung vorgesehen ist zur Messung des Stroms durch die erste Antenne (20), aus welchem ein Korrekturparameter ermittelbar ist zur Kompensation einer in die zweite Antenne (10) beim Senden der ersten Antenne (20) induzierten Spannung.

12. Verfahren zum Betreiben eines Datenträgers, insbesondere einer MikroSD-Karte, wobei der Datenträger einen Träger (120), eine erste und eine zweite Antenne (20, 10) sowie eine mit der ersten und der zweiten Antenne (20, 10) gekoppelte Verarbeitungseinheit aufweist, wobei

    - über die Verarbeitungseinheit mittels der ersten Antenne (20) ein Feld erzeugt wird, wobei zur Erzeugung des Felds durch die Verarbeitungseinheit eine Frequenz des Lesegeräts verarbeitet wird;
    - über die zweite Antenne (10) ein Lesegerätfeld empfangen wird; und
    - die erste sendende Antenne (20) im Sendebetrieb die zweite Antenne (10) nicht oder minimal beeinflusst;
    **dadurch gekennzeichnet, dass**
das erzeugte Feld des Datenträgers bei einer sendenden Kommunikation des Datenträgers mit einem Lesegerät eine Modulation des Lesegerätfelds bewirkt, und zur Synchronisation der Sendefrequenz des Datenträgers mit der Sendefrequenz des Lesegerätes das Lesegerätfeld über die zweite Antenne empfangen und dessen Frequenz durch die Verarbeitungseinheit ausgewertet wird.

**Claims**

1. A portable data carrier, in particular a micro-SD card, with a carrier (100), a first and a second antenna (20, 10), and a processing unit coupled with the first and the second antenna (12, 10), wherein

    - the first and the second antenna (20, 10) are mutually arranged such that the second antenna (10) is not or minimally influenced by the first transmitting antenna (20),
    - a field can be generated via the processing unit by means of the first antenna (20) upon a transmitting communication of the data carrier with a reading device, wherein for generating the field by the processing unit a frequency of the reading device can be processed;
    - a reading device field is received via the second antenna (10);
    **characterized in that**
the field transmitted by the first antenna (20) causes a modulation of the reading device field, and for synchronizing the transmission frequency of the data carrier with the transmission frequency of the reading device, the reading device field is received via the second antenna (10) and its frequency is evaluated by the processing unit.

2. The data carrier according to claim 1, **characterized in that** the first and the second antenna (20, 10) are mutually arranged such that the closed-loop integral over the magnetic flux of the signal emitted by the first antenna through the second antenna (10) is zero.

3. The data carrier according to claim 1 or 2, **characterized in that** the first antenna (20) is applied to a ferrite core and arranged with its coil axis orthogonally to the coil axis of the second antenna that is configured as a planar antenna.

4. The data carrier according to any of the claims 1 to 3, **characterized in that** the first antenna (20) and/or the second antenna (10) are a planar antenna which are arranged planarly to a main face of the carrier.

5. The data carrier according to claim 4, **characterized in that** the first and the second antenna are arranged at least partially above each other.

6. The data carrier according to claim 5, **characterized in that** the degree of an overlapping is chosen such that field lines of different directions cancel each other out in sum in the inner surface of the second antenna (10).

7. The data carrier according to any of the claims 1 to 6, **characterized in that** the first and the second antenna (20,10) are arranged in mutually coaxial fashion.

8. The data carrier according to claim 7, **characterized in that** the first antenna (20) is ring-shaped.

9. The data carrier according to claim 7 or 8, **characterized in that** the second antenna (10) comprises two windings extending mutually concentrically, which are optionally arranged in the same plane.

10. The data carrier according to claim 9, **characterized in that** the two windings of the second antenna (10) are so arranged and dimensioned with reference to the first antenna (20) that an equal coupling factor is adjusted between the one winding and the first antenna and the other winding and the first antenna.

11. The data carrier according to any of the claims 1 to 10, **characterized in that** a current measuring device is provided for measuring the current through the first antenna (20), from which a correction parameter can be ascertained for compensating a voltage induced in the second antenna (10) upon transmission by the first antenna (20).

12. A method for operating a data carrier, in particular a micro-SD card, wherein the data carrier has a carrier (120), a first and a second antenna (20, 10) and a processing unit coupled with the first and the second antenna (20, 10), wherein

- via the processing unit a field is generated by means of the first antenna (20), wherein for generating the field by the processing unit a frequency of the reading device is processed;
- a reading device field is received via the second antenna (10); and
- the first transmitting antenna (20) in transmit mode does not influence or minimally influences the second antenna;
**characterized in that**
the generated field of the data carrier effects a modulation of the reading device field upon a transmitting communication of the data carrier with a reading device, and for synchronizing the transmission frequency of the data carrier with the transmission frequency of the reading device, the reading device field is received via the second antenna and its frequency is evaluated by the processing unit.

**Revendications**

1. Support de données portable, en particulier carte micro-SD, ayant un support (100), une première et une deuxième antenne (20, 10), ainsi qu'une unité de traitement couplée à la première et à la deuxième antenne (12, 10), cependant que
la première et la deuxième antenne (20, 10) sont agencées de telle manière l'une par rapport à l'autre que la deuxième antenne (10) n'est pas ou que minimement influencée par la première antenne (20) émettrice,
par le biais de l'unité de traitement, au moyen de la première antenne (20), lors d'une communication émettrice du support de données avec un appareil de lecture, un champ peut être généré, cependant que, pour la génération du champ par l'unité de traitement, une fréquence de l'appareil de lecture peut être traitée ;
par le biais de la deuxième antenne (10), un champ de l'appareil de lecture est reçu;
**caractérisé en ce que**
le champ émis par la première antenne (20) engendre une modulation du champ de l'appareil de lecture, et, pour la synchronisation de la fréquence d'émission du support de données avec la fréquence d'émission de l'appareil de lecture, le champ de l'appareil de lecture est reçu par le biais de la deuxième antenne (10) et sa fréquence est évaluée par l'unité de traitement.

2. Support de données selon la revendication 1, **caractérisé en ce que** la première et la deuxième antenne (20, 10) sont agencées de telle manière l'une par rapport à l'autre que l'intégrale à courbe fermée au-dessus du flux magnétique du signal émis par la première antenne est égale à zéro à travers la deuxième antenne (10).

3. Support de données selon la revendication 1 ou 2, **caractérisé en ce que** la première antenne (20) est placée sur un noyau de ferrite et est agencée de telle sorte que son axe de bobine est orthogonal à l'axe de bobine de la deuxième antenne qui est réalisée sous forme d'antenne planaire.

4. Support de données selon une des revendications de 1 à 3, **caractérisé en ce que** la première antenne (20) et/ou la deuxième antenne (10) sont des antennes planaires qui sont agencées planairement par rapport à une surface principale du support.

5. Support de données selon la revendication 4, **caractérisé en ce que** la première et la deuxième antenne sont agencées au moins partiellement l'une sur l'autre.

6. Support de données selon la revendication 5, **caractérisé en ce que** le degré d'un chevauchement est choisi de telle façon que des lignes de champ de différente direction s'équilibrent en leur somme dans la surface intérieure de la deuxième antenne (10).

7. Support de données selon une des revendications de 1 à 6, **caractérisé en ce que** la première et la deuxième antenne (20, 10) sont agencées coaxialement l'une par rapport à l'autre.

8. Support de données selon la revendication 7, **caractérisé en ce que** la première antenne (20) est annulaire.

9. Support de données selon la revendication 7 ou 8, **caractérisé en ce que** la deuxième antenne (10) comprend deux enroulements concentriques l'un par rapport à l'autre, qui, en option, sont agencés dans le même plan.

10. Support de données selon la revendication 9, **caractérisé en ce que** les deux enroulements de la deuxième antenne (10) sont agencés de telle façon et ont des dimensions telles par rapport à la première antenne (20) qu'un même facteur de couplage est obtenu entre le un enroulement et la première antenne ainsi qu'entre l'autre enroulement et la première antenne.

11. Support de données selon une des revendications de 1 à 10, **caractérisé en ce qu'**un dispositif de mesure de courant est prévu pour la mesure du courant par la première antenne (20), permettant de déterminer un paramètre de correction pour la compensation d'une tension induite dans la deuxième antenne (10) lors de l'émission de la première antenne (20).

12. Procédé d'exploitation d'un support de données, en particulier d'une carte micro-SD, le support de données comportant un support (120), une première et une deuxième antenne (20, 10) ainsi qu'une unité de traitement couplée à la première et à la deuxième antenne (20, 10), cependant que
par le biais de l'unité de traitement, au moyen de la première antenne (20), un champ est généré, cependant que, pour la génération du champ par l'unité de traitement, une fréquence de l'appareil de lecture est traitée;
par le biais de la deuxième antenne (10), un champ de l'appareil de lecture est reçu; et
la première antenne (20) émettrice n'influence pas ou que minimement en mode émission la deuxième antenne (10);
**caractérisé en ce que**
le champ généré du support de données engendre, lors d'une communication émettrice du support de données avec un appareil de lecture, une modulation du champ de l'appareil de lecture, et, pour la synchronisation de la fréquence d'émission du support de données avec la fréquence d'émission de l'appareil de lecture, le champ de l'appareil de lecture est reçu par le biais de la deuxième antenne et sa fréquence est évaluée par l'unité de traitement.

Fig. 1

Fig. 2

Fig. 3

Fig. 4

Fig. 5

Fig. 6

EP 2 492 848 B1

Fig. 7

Fig. 8

EP 2 492 848 B1

Fig. 9

Fig. 10

Fig. 12

Fig. 11

Fig. 13

Fig. 14

Fig. 15

**IN DER BESCHREIBUNG AUFGEFÜHRTE DOKUMENTE**

**In der Beschreibung aufgeführte Patentdokumente**

- WO 2006000446 A1
- EP 1936740 A1
- US 20040232248 A1
- US 5099227 A

**In der Beschreibung aufgeführte Nicht-Patentliteratur**

- **KLAUS FINKENZELLER.** RFID-Handbuch. Hanser Verlag